# EUROPEAN PATENT APPLICATION

(11) **EP 2 472 789 A1**
(43) Date of publication of application: **04.07.2012**
(21) Application number: 10823040.0
(22) Date of filing: 15.09.2010
(51) Int. Cl.: H04L 12/28

(54) **METHOD, DEVICE AND SYSTEM FOR IMPLEMENTING MULTIPARTY COMMUNICATION**

(30) Priority: 15.10.2009 CN 200910206247
(71) Applicant: Huawei Technologies Co., Ltd., Shenzhen, Guangdong 518129 (CN)
(72) Inventor: JIANG, Sheng, Shenzhen Guangdong 518129 (CN)
(74) Representative: Körber, Martin Hans
(86) International application number: PCT/CN2010/076963
(87) International publication number: WO 2011/044810

(57) **Abstract**

Embodiments of the present invention relate to the field of communication technologies and disclose a method, an apparatus, and a system for implementing multi-party communication to extend application of a traversal technology in the multi-party communication. A method for implementing multi-party communication includes: sending a communication request to a first node through a forwarding node on a network layer; and receiving the communication request sent by the first node, and setting up a communication connection with the first node. The method, apparatus, and system provided in the embodiments of the present invention are applicable to multi-party communication that requires traversal.

## Description

This application claims priority to Chinese Application No. 200910206247.8, filed on October 15, 2009 and entitled "METHOD, APPARATUS, AND SYSTEM FOR IMPLEMENTING MULTI-PARTY COMMUNICATION", which is incorporated herein by reference in its entirety.

### FIELD OF THE INVENTION

The present invention relates to the field of communication technologies, and in particular, to a method, an apparatus, and a system for implementing multi-party communication.

### BACKGROUND OF THE INVENTION

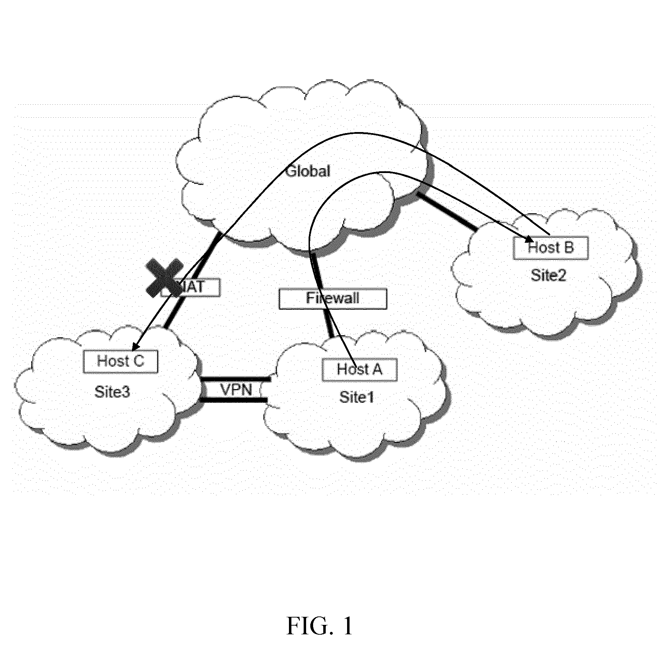

In a multi-party communication scenario of the Internet (Internet), in some cases, a third party needs to set up, according to information provided by one party currently in a communication state, a communication connection between the third party and the other party under communication currently (communication peer). For example, in the scenario shown in FIG. 1, a host (host) A and a host C are two parties communicating with each other, and know some information related to the opposite party, including an address (in an existing solution, the address includes only an IP address in a domain to which the host belongs or a domain name of the host), and so on; one party (host A) notifies the third party (host B) of information related to the communication peer (host C), so that the host B performs addressing for the host C directly and originates a communication request.

However, because of certain reasons such as address range and firewall, if the host C uses a private IP address in a site (domain or network) 3, the host B is unable to set up a communication connection with the host C directly according to address information of the host C, where the address information of the host C is provided by the host A.

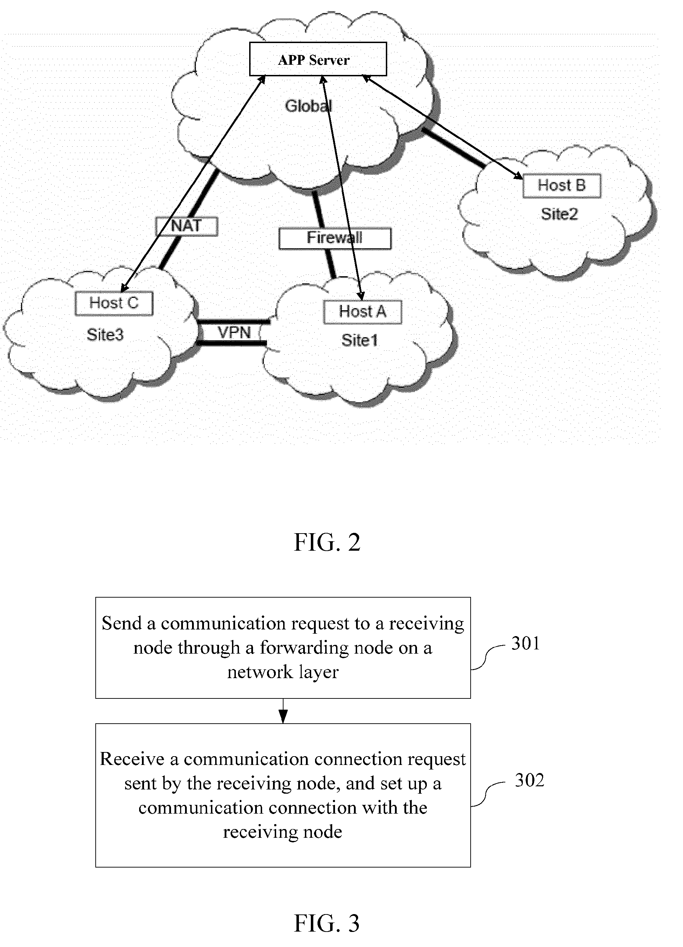

In the prior art, a solution to the foregoing problem is to implement a communication connection between the host B and the host C by means of traversal through an application layer. As shown in FIG. 2, if all hosts have set up a valid communication connection with an application server (APP Server), when the host B needs to communicate with the host C, the host B may notify the application server of the request; the application server forwards host B's communication request through a communication connection already set up between the application server and the host C; after receiving the request forwarded by the application server, the host C originates an outward communication request to the host B immediately. In this way, a communication connection to the host B is set up.

In the process of implementing the foregoing multi-party communication, the inventor finds at least the following problems in the prior art:

The solution, which sets up a communication connection between the host B and the host C by means of traversal through the application layer, does not work unless a valid communication connection is setup between all hosts and the application server. Moreover, the traversal process depends on the application layer, and the solution serves only a specific application and is not universally applicable. Therefore, in an existing multi-party communication process, the application of a traversal technology is limited significantly.

### SUMMARY OF THE INVENTION

Embodiments of the present invention provide a method, an apparatus, and a system for implementing multi-party communication to extend application of a traversal technology in multi-party communication.

To fulfill the foregoing objectives, the embodiments of the present invention employ the following technical solutions:

A method for implementing multi-party communication includes:
sending a communication request to a receiving node through a forwarding node on a network layer; and
receiving a communication connection request sent by the receiving node, and setting up a communication connection with the receiving node.

A method for implementing multi-party communication, where the method is applied on a network layer, includes:
receiving a communication request sent by an originating node;
judging whether the communication request complies with a forwarding rule; and
forwarding the communication request to a receiving node if the communication request complies with the forwarding rule; or returning error information to the originating node if the communication request does not comply with the forwarding rule.

An originating node apparatus for implementing multi-party communication includes:
a forwarding module, configured to send a communication request to a receiving node through a forwarding node on a network layer; and
a receiving module, configured to receive a communication connection request sent by the receiving node, and set up a communication connection with the receiving node.

A forwarding node apparatus for implementing multi-party communication, where the forwarding node apparatus is located on a network layer, includes:
a receiving module, configured to receive a communication request sent by an originating node;
a judging module, configured to judge whether the communication request complies with a forwarding rule; and
a sending module, configured to forward the communication request to a receiving node when a judging result of the judging module is that the communication request complies with the forwarding rule; or return error information to the originating node when a judging result of the judging module is that the communication request does not comply with the forwarding rule.

A system for implementing multi-party communication includes an originating node, a forwarding node, and a receiving node that are all located on a network layer;

The originating node is configured to send a communication request to the forwarding node, where the communication request carries address information of the receiving node;

The forwarding node is configured to forward the communication request to the receiving node; and

The receiving node is configured to send a communication connection request to the originating node after receiving the communication request.

Through the method, apparatus and system for implementing multi-party communication according to the embodiments of the present invention, the forwarding node located on the network layer implements traversal of the communication request. Because implementation of the entire process is based on the network layer, the technical solutions of the present invention are also applicable to various upper-layer applications. Moreover, the technical solutions according to the embodiments of the present invention work no matter whether all hosts are connected with the forwarding node on an application layer or not, which extends application scenarios of the traversal technology in the multi-party communication greatly.

### BRIEF DESCRIPTION OF THE DRAWINGS

To describe the technical solutions according to the embodiments of the present invention or in the prior art more clearly, the following outlines accompanying drawings involved in description of the embodiments. Apparently, the accompanying drawings in the following description are merely some embodiments of the present invention, and persons of ordinary skill in the art may further obtain other drawings from these accompanying drawings without making creative efforts.

FIG. 1 is a conceptual diagram for performing multi-party communication on a network layer in the prior art;

FIG. 2 is a conceptual diagram for implementing traversal through an application layer in an existing multi-party communication process;

FIG. 3 is a flowchart of a method according to a first embodiment of the present invention;

FIG. 4 is a schematic structural diagram of an apparatus according to a first embodiment of the present invention;

FIG. 5 is a flowchart of a method according to a second embodiment of the present invention;

FIG. 6 is a schematic structural diagram of an apparatus according to a second embodiment of the present invention;

FIG. 7 is a signaling flowchart of a method according to a third embodiment of the present invention;

FIG. 8 is a signaling flowchart of a method according to a fourth embodiment of the present invention;

FIG. 9 is a schematic structural diagram of an apparatus according to a fifth embodiment of the present invention;

FIG. 10 is a schematic structural diagram of a system according to a sixth embodiment of the present invention; and

FIG. 11 is a conceptual diagram of an instance for performing traversal between different IP networks according to an embodiment of the present invention.

### DETAILED DESCRIPTION OF THE EMBODIMENTS

The technical solutions according to the embodiments of the present invention are described clearly and completely in conjunction with the accompanying drawings in the embodiments of the present invention. Evidently, the embodiments to be described are merely part of rather than all of the embodiments of the present invention. All other embodiments, which are obtained by those of ordinary skill in the art based on the embodiments of the present invention without making creative efforts, shall fall within the protection scope of the present invention.

A method, an apparatus and a system for implementing multi-party communication according to embodiments of the present invention are described in detail with reference to the accompanying drawings.

### Embodiment 1

As shown in FIG. 3, a method for implementing multi-party communication provided in an embodiment of the present invention includes:

301. Send a communication request to a receiving node through a forwarding node on a network layer.

In this embodiment, the communication request carries address information of the receiving node.

The address information of the receiving node may be information of a domain to which the receiving node belongs, and an intra-domain identifier of the receiving node.

The information of the domain to which the receiving node belongs may be a network name (such as huawei.com) or protocol name, where the network name or the protocol name corresponds to the domain; and the intra-domain identifier corresponding to the receiving node may be an intra-domain IP address or a host name of the receiving node.

The communication request may be a request for setting up an IP connection, and certainly may also be another request related to a different service.

302. Receive a communication connection request sent by the receiving node, and set up a communication connection with the receiving node.

In this embodiment, a subject for executing the foregoing steps is an originating node of the communication request, where the originating node may be a host in a network or domain; the receiving node may be a host in another network or domain, and the forwarding node may be a gateway corresponding to a network to which the receiving node belongs or a domain to which the receiving node belongs, or a third-party device that sets up a communication connection with the sending node and the receiving node simultaneously.

In this embodiment, the foregoing sequence numbers are not intended for restricting the implementation order between the steps.

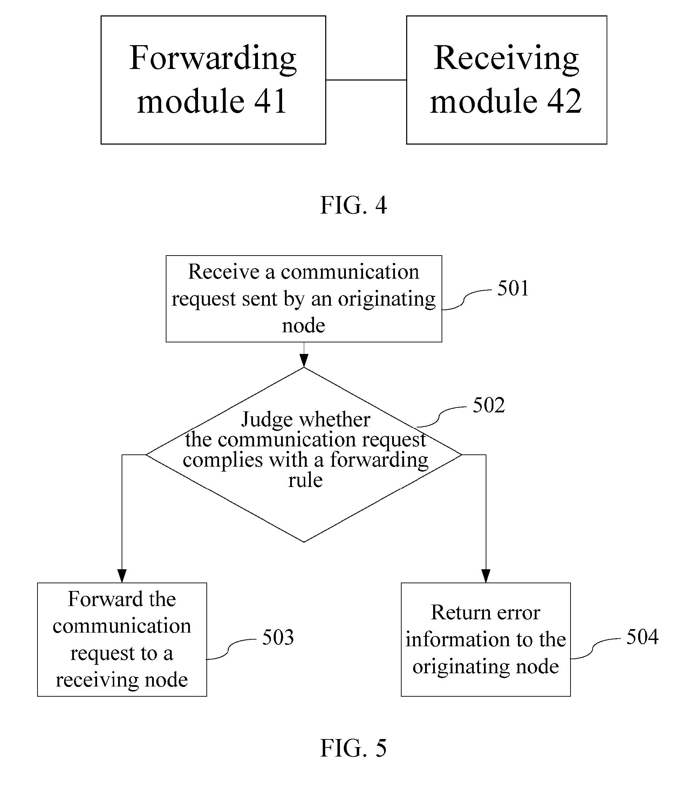

To better implement the foregoing multi-party communication method, an embodiment of the present invention further provides an originating node apparatus for implementing multi-party communication. As shown in FIG. 4, the apparatus includes:
a forwarding module 41, configured to send a communication request to a receiving node through a forwarding node on a network layer; and
a receiving module 42, configured to receive a communication connection request sent by the receiving node, and set up a communication connection with the receiving node.

Through the method for implementing multi-party communication and the originating node apparatus in this embodiment of the present invention, the forwarding node located on the network layer implements traversal of the communication request. Because implementation of the entire process is based on the network layer, the technical solutions of the present invention are also applicable to various upper-layer applications. Moreover, the technical solutions according to the embodiments of the present invention work no matter whether all hosts are connected with the forwarding node on an application layer or not, which extends application scenarios of a traversal technology in the multi-party communication greatly.

### Embodiment 2

As shown in FIG. 5, a method for implementing multi-party communication provided in an embodiment of the present invention is applied to a network layer, and specifically includes:

501. Receive a communication request sent by an originating node.

In this embodiment, the communication request carries address information of the receiving node, and the address information of the receiving node may be information of a domain to which the receiving node belongs and an intra-domain identifier of the receiving node, and is used to indicate that the communication request is sent to the receiving node.

502. Judge whether the communication request complies with a forwarding rule.

The forwarding rule here may be formulated by a layer higher than the network layer and delivered to the forwarding node located on the network layer. For example, the forwarding rule may be security authentication, and if the communication request complies with the security authentication, it is regarded that the communication request complies with the forwarding rule; if the communication request does not comply with the security authentication, it is regarded that the communication request does not comply with the forwarding rule.

If the communication request complies with the forwarding rule, step 503 is executed; if the communication request does not comply with the forwarding rule, step 504 is executed.

503. Forward the communication request to the receiving node.

504. Return error information to the originating node. The error information includes an error cause for the communication request, namely, an error cause indicates that the communication request does not comply with the forwarding rule, so that the originating node makes correction at the time of originating a next communication request.

In this embodiment, a subject for executing the foregoing steps is the forwarding node of the communication request, where the forwarding node may be a gateway corresponding to a network to which the receiving node belongs or a domain to which the receiving node belongs, or a third-party device that sets up a communication connection with the sending node and the receiving node simultaneously.

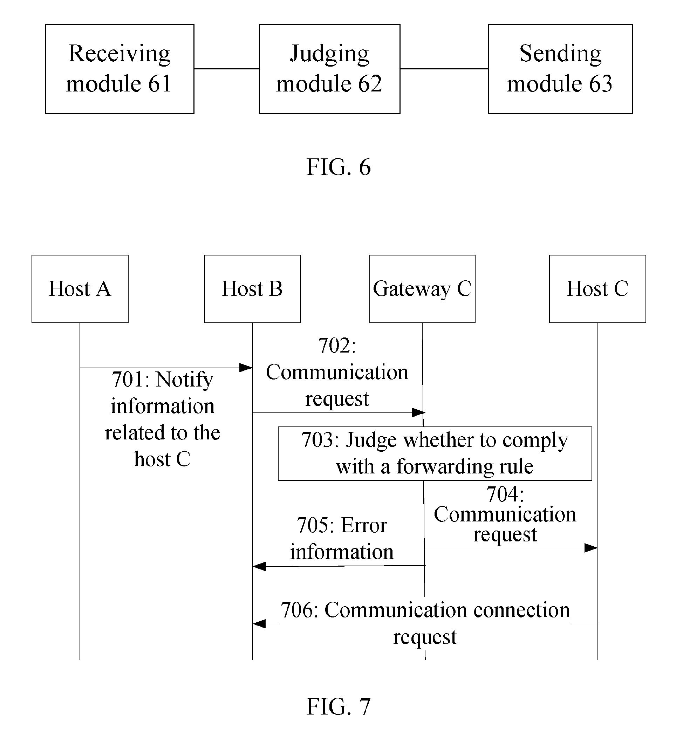

To better implement the foregoing multi-party communication method, an embodiment of the present invention further provides a forwarding node apparatus for implementing multi-party communication. The forwarding node apparatus is located on the network layer. As shown in FIG. 6, the forwarding node apparatus includes:
a receiving module 61, configured to receive a communication request sent by an originating node;
a judging module 62, configured to judge whether the communication request complies with a forwarding rule; and
a sending module 63, configured to forward the communication request to a receiving node when a judging result of the judging module 62 is that the communication request complies with the forwarding rule; or return error information to the originating node when a judging result of the judging module 62 is that the communication request does not comply with the forwarding rule.

Through the method for implementing multi-party communication and the forwarding node apparatus in this embodiment of the present invention, in the process of forwarding the communication request, the communication request is authenticated first, and it is judged whether the communication request complies with the forwarding rule; if the communication request complies with the forwarding rule, the communication request is forwarded; if the communication request does not comply with the forwarding rule, an error cause is fed back to a sender. In this way, it is avoided that a communication request that carries erroneous data or incomplete data is sent to a receiver, which may improve efficiency of setting up the communication connection.

### Embodiment 3

The following takes a specific example to further describe a method for implementing multi-party communication in this embodiment of the present invention. In a current network, a communication connection is set up between a host A and a host B, and a communication connection is set up between the host A and a host C through a VPN (Virtual Private Network, virtual private network). In this embodiment, a gateway of a domain to which a receiving node belongs serves as a forwarding node.

Specifically, as shown in FIG. 7, the method for implementing multi-party communication in a gateway forwarding mode in this embodiment of the present invention includes the following steps:

701. A host A notifies a host B (originating node) of information related to a host C (receiving node), where the information includes information of a domain to which the host C belongs and an identifier of the host C in the domain (may be an intra-domain address or an intra-domain name). For example, Huawei.com is used as a domain identifier, and an internal IP address of the host C or a host name of the host C is used as an intra-domain identifier.

702. The host B originates a communication request to a gateway C (forwarding node). The communication request carries the information of the domain to which the host C belongs and the intra-domain identifier, and indicates that the host B intends to communicate with the host C.

The gateway C is a gateway between a site 3 to which the host C belongs and a public network, and address information of the gateway may be obtained in the following manners:

(1) The address information of the gateway C may be public-known site 3 gateway information; for example, gateway.huawei.com is used as a default gateway domain name of the domain;

(2) The address information of the gateway C is obtained by querying a DNS (Domain Name System, domain name system), and so on; and

(3) The address information of the gateway C may also be included in a message sent by the host A to the host B.

Afterward, the host B may perform addressing on the gateway C according to the address information of the gateway C, and send the communication request to the gateway C.

703. The gateway C judges whether the received communication request complies with a forwarding rule.

The forwarding rule here may be formulated by a layer higher than a network layer and delivered to the forwarding node located on the network layer. For example, the forwarding rule may be security authentication, and if the communication request complies with the security authentication, it is regarded that the communication request complies with the forwarding rule; if the communication request does not comply with the security authentication, it is regarded that the communication request does not comply with the forwarding rule.

If the communication request complies with the forwarding rule, steps 704 and 706 are executed; if the communication request does not comply with the forwarding rule, steps 705 and 706 are executed.

704. The gateway C forwards the communication request to the host C.

705. The gateway C returns error information to the host B. The error information includes an error cause for the communication request, so that the host B makes correction at the time of originating a next communication request.

706. After receiving the communication request, the host C originates a communication connection request to the host B, and thus sets up a bidirectional communication connection with the host B.

In some cases, for example, in the case that communication may be set up between the host C and the host B without traversal, the host C may serve the purpose of security inspection only; after receiving the communication request forwarded by the gateway C, the host C does not need to originate an outward communication connection request again, but sets up the bidirectional communication connection between the host C and the host B directly.

In the method for implementing multi-party communication provided in this embodiment of the present invention, a gateway of a domain to which a host belongs is used as a forwarding node, and traversal of the communication request is implemented through the forwarding node. Because implementation of the entire process is based on the network layer, the technical solutions of the present invention are also applicable to various upper-layer applications. Moreover, the technical solutions according to the embodiments of the present invention work no matter whether all hosts are connected with the forwarding node on an application layer or not, which extends application scenarios of a traversal technology in the multi-party communication greatly.

### Embodiment 4

The following takes a specific example to further describe a method for implementing multi-party communication in this embodiment of the present invention. In a current network, a communication connection is set up between a host A and a host B, and a communication connection is set up between the host A and a host C through a VPN. In this embodiment, the host A serves as a forwarding node.

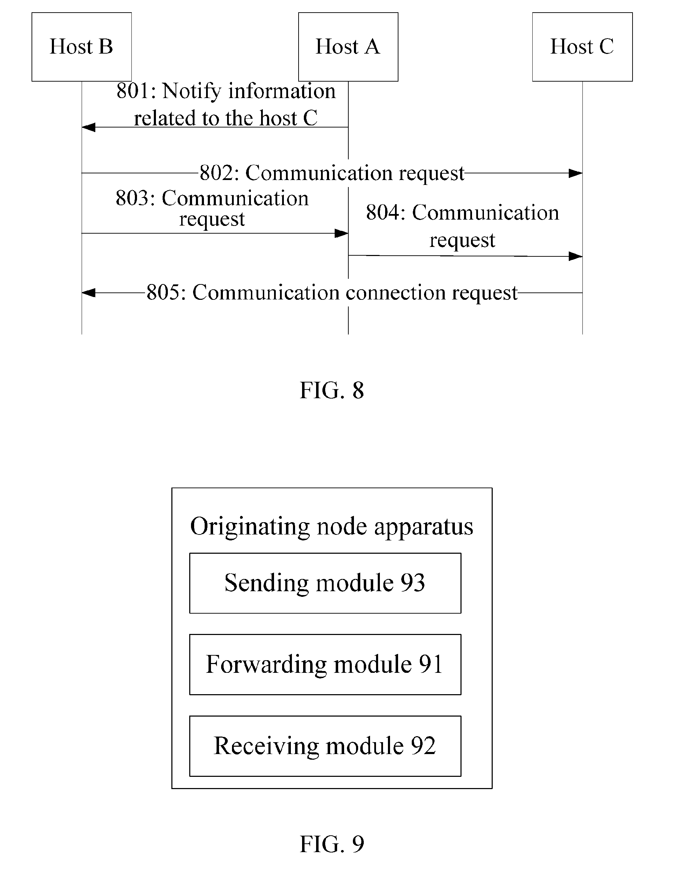

Specifically, as shown in FIG. 8, the method for implementing multi-party communication in a host proxy forwarding mode in this embodiment of the present invention includes the following steps:

801. A host A notifies a host B (originating node) of address information related to a host C (receiving node), where the address information of the host C may be a private network address (for example, an intra-domain address or an intra-domain name) of the host C.

Although private network addresses overlap each other between different domains, an address of the host C cannot be determined uniquely only according to the private network address; however, the host B may implement addressing for the host C by making complete use of the information because the address information of the host C is notified by the host A to the host B.

802. The host B originates a communication request to the host C according to the obtained address information of the host C.

If the communication request is sent successfully, it is not necessary to perform the following step; if the communication request is sent unsuccessfully, step 803 needs to be performed.

803. The host B sends a communication request to the host A (forwarding node). The communication request carries the address information of the host C to indicate that the host B intends to communicate with the host C.

804. The host A forwards the communication request to the host C through the communication connection established between the host A and the host C.

805. After receiving the communication request, the host C originates a communication connection request to the host B, and thus sets up a bidirectional communication connection with the host B.

In the method for implementing multi-party communication provided in this embodiment of the present invention, a host that sets up a communication connection with the originating node and the receiving node at the same time is used as a forwarding node, and traversal of the communication request is implemented through the forwarding node. Because implementation of the entire process is based on a network layer, the technical solutions of the present invention are also applicable to various upper-layer applications. Moreover, the technical solutions according to the embodiments of the present invention work no matter whether all hosts are connected with the forwarding node on an application layer or not, which extends application scenarios of a traversal technology in the multi-party communication greatly.

### Embodiment 5

Corresponding to the method for implementing multi-party communication provided in the fourth embodiment, an embodiment of the present invention further provides an originating node apparatus for implementing multi-party communication. As shown in FIG. 9, the originating node apparatus includes a forwarding module 91, a receiving module 92, and a sending module 93.

After the originating node apparatus obtains address information of a receiving node, the sending module 93 sends a communication request to the receiving node; if the sending module 93 sends the communication request unsuccessfully, the forwarding module 91 sends the communication request to the receiving node through the forwarding node on a network layer.

After receiving the communication request, the receiving node sends a communication connection request to the originating node apparatus; and therefore, the receiving module 92 is configured to receive the communication connection request sent by the receiving node, and set up a communication connection with the receiving node.

Through the originating node apparatus for implementing multi-party communication in this embodiment of the present invention, a host that sets up a communication connection with the originating node and the receiving node at the same time is used to implement traversal of the communication request. Because implementation of the entire process is based on the network layer, the technical solutions of the present invention are also applicable to various upper-layer applications. Moreover, the technical solutions according to the embodiments of the present invention work no matter whether all hosts are connected with the forwarding node on an application layer or not, which extends application scenarios of a traversal technology in the multi-party communication greatly.

### Embodiment 6

Generally, an originating node and a receiving node for communication coexist in multi-party communication; when the originating node is unable to send a communication request to the receiving node properly, traversal of the communication request is implemented through a forwarding node. In this way, a complete system for implementing multi-party communication is formed.

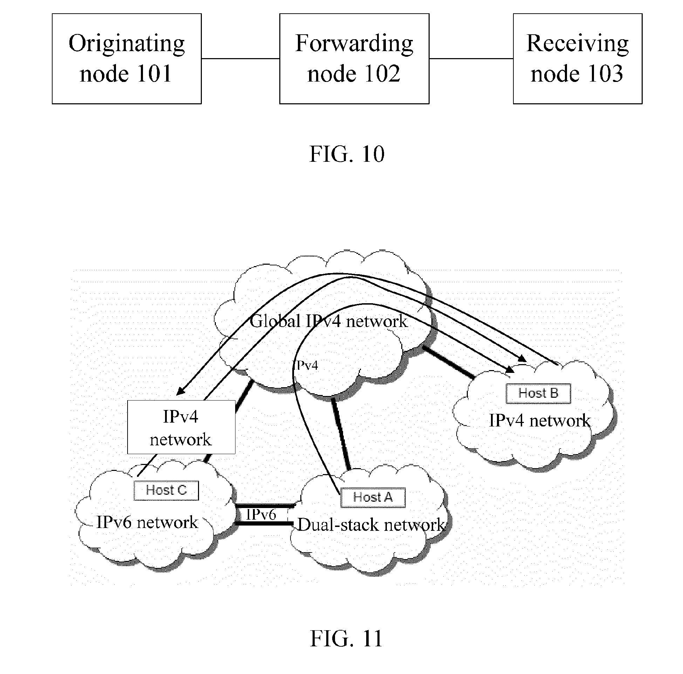

As shown in FIG. 10, a system for implementing multi-party communication in this embodiment of the present invention includes an originating node 101, a forwarding node 102, and a receiving node 103 that are all located on a network layer.

The originating node 101 is configured to send a communication request to the forwarding node 102, where the communication request carries address information of the receiving node 103;

The forwarding node 102 is configured to forward the communication request to the receiving node 103; and

The receiving node 103 is configured to send a communication connection request to the originating node 101 after receiving the communication request.

If the forwarding node 102 is a gateway of a domain to which the receiving node 103 belongs, the forwarding node 102 is further configured to judge whether the communication request complies with a forwarding rule; if the communication request complies with the forwarding rule, the forwarding node 102 forwards the communication request to the receiving node 103; if the communication request does not comply with the forwarding rule, the forwarding node 102 is further configured to return error information to the originating node 101.

If the forwarding node 102 is a host that sets up a communication connection with the originating node 101 and the receiving node 103 at the same time, the originating node 101 is further configured to send a communication request to the receiving node 103 directly; if the sending fails, the originating node 101 sends the communication request to the forwarding node 102, and the forwarding node 102 forwards the communication request to the receiving node 103.

Through the system for implementing multi-party communication in this embodiment of the present invention, the forwarding node located on the network layer implements traversal of the communication request. Because implementation of the entire process is based on the network layer, the technical solutions of the present invention are also applicable to various upper-layer applications. Moreover, the technical solutions of the present invention work no matter whether all hosts are connected with the forwarding node on an application layer or not, which extends application scenarios of a traversal technology in the multi-party communication greatly.

In the embodiment of the present invention, the technical solutions according to the embodiments of the present invention are described by taking an example that a public network node host B originates a communication request to a non-public network node host C. However, it should be noted that the method, the apparatus and the system for implementing multi-party communication in this embodiment of the present invention are not limited to such an application scenario, and are also applicable to other communication processes that require traversal. For example, when an IPv4-based host originates a communication request to an IPv6-based host, the communication request can be hardly sent to the IPv6-based host properly. In this case, the solution provided in the embodiments of the present invention may be used to solve the foregoing problem that the IPv4-based host sends the communication request to the IPv6-based host.

For example, in the scenario shown in FIG. 11, a host B belongs to an IPv4 network, and a host C belongs to an IPv6 network; but a host A belongs to a dual-stack network (Dual-stack Network), and may communicate with the host B through an IPv4 protocol and communicate with the host C through an IPv6 protocol at the same time.

Because the host B is an IPv4-based host, and the host C is an IPv6-based host, a communication request sent by the host B to the host C directly is blocked; in this case, the communication request originated by the host B may be forwarded to the host C through a gateway (NAT64 Gateway) corresponding to a network to which the host C belongs. First, the host B performs addressing for the NAT64 gateway according to an IPv4 address of the NAT64 gateway corresponding to the host C, where the IPv4 address is provided by the host A; or, the host B searches and finds the IPv4 address of the NAT64 gateway according to a DNS, and then requests the NAT64 gateway to forward the communication request to the host C; afterward, after receiving the communication request, the host C originates a communication connection request to the host B (from IPv6 to IPv4). In this way, a bidirectional communication connection is set up between the host C and the host B.

Through the description about the foregoing embodiments, persons skilled in the art may be clearly understand that the present invention may be implemented through software in addition to a necessary hardware platform, and certainly may also be implemented through hardware. Based on such understanding, all or part of the contribution of the technical solutions of the present invention to the prior art may be embodied in a software product. The computer software product may be stored in a storage medium, such as a ROM/RAM, a magnetic disk, or an optical disk, and incorporates several instructions for instructing a computer device (may be a personal computer, a server, or a network device and so on) to execute the method specified in any embodiment of the present invention or part of the embodiment.

The foregoing descriptions are merely exemplary embodiments of the present invention, but not intended to limit the protection scope of the present invention. Any modifications, variations or replacement that can be easily through of by those skilled in the art within the technical scopes disclosed in the present invention should fall within the protection scope of the present invention. Therefore, the protection scope of the present invention is subject to the appended claims.

## Claims

1. A method for implementing multi-party communication, comprising:
sending a communication request to a first node through a forwarding node on a network layer; and
receiving the communication request sent by the first node, and setting up a communication connection with the first node.

2. The method for implementing multi-party communication according to claim 1, wherein:
the communication request carries information of a domain to which the first node belongs and an intra-domain identifier of the first node.

3. The method for implementing multi-party communication according to claim 1, wherein:
before sending the communication request to the first node through the forwarding node on the network layer, the method further comprises:
sending the communication request to the first node; and
performing the step of sending the communication request to the first node through the forwarding node on the network layer if the communication request is sent unsuccessfully.

4. A method for implementing multi-party communication, wherein the method is applied on a network layer and the method comprises:
receiving a communication request sent by an originating node;
judging whether the communication request complies with a forwarding rule; and
forwarding the communication request to a first node if the communication request complies with the forwarding rule; or returning error information to the originating node if the communication request does not comply with the forwarding rule.

5. An originating node apparatus for implementing multi-party communication, comprising:
a forwarding module, configured to send a communication request to a first node through a forwarding node on a network layer; and
a receiving module, configured to receive the communication request sent by the first node, and set up a communication connection with the first node.

6. The originating node apparatus according to claim 5, further comprising:
a sending module, configured to send the communication request to the first node, wherein
the forwarding module sends the communication request to the first node through the forwarding node on the network layer if the sending module sends the communication request unsuccessfully.

7. A forwarding node apparatus for implementing multi-party communication, wherein the forwarding node apparatus is located on a network layer, and the forwarding node apparatus comprises:
a receiving module, configured to receive a communication request sent by an originating node;
a judging module, configured to judge whether the communication request complies with a forwarding rule; and
a sending module, configured to forward the communication request to a first node when a judging result of the judging module is that the communication request complies with the forwarding rule; or return error information to the originating node when a judging result of the judging module is that the communication request does not comply with the forwarding rule.

8. A system for implementing multi-party communication, comprising an originating node, a forwarding node, and a first node that are all located on a network layer, wherein:
the originating node is configured to send a communication request to the forwarding node, wherein the communication request carries address information of the first node;
the forwarding node is configured to forward the communication request to the first node; and
the first node is configured to send a communication request to the originating node after receiving the communication request.

9. The system according to claim 8, wherein: if the forwarding node is a gateway of a domain to which the first node belongs,
the forwarding node is further configured to judge whether the communication request complies with a forwarding rule; and
the forwarding node forwards the communication request to the first node if the communication request complies with the forwarding rule; or the forwarding node is further configured to return error information to the originating node if the communication request does not comply with the forwarding rule.

10. The system according to claim 8, wherein: if the forwarding node is a host that sets up a communication connection with the originating node and the first node at the same time,
the originating node is further configured to send the communication request to the first node directly; and
if the sending fails, the originating node sends the communication request to the forwarding node, and the forwarding node forwards the communication request to the first node.
